# EUROPEAN PATENT APPLICATION

(11) **EP 4 675 171 A1**
(43) Date of publication of application: **07.01.2026**
(21) Application number: 24763568.3
(22) Date of filing: 08.02.2024
(51) Int. Cl.: F23K 5/00, F23C 1/00, F23C 13/08, F23K 5/08, F23K 5/10

(54) **INDUSTRIAL FURNACE**

(30) Priority: 27.02.2023 JP 2023028503
(71) Applicant: Sanken Sangyo Co., Ltd., Hiroshima-shi, Hiroshima 731-3169 (JP); Hiroshima University, Higashihiroshima-shi Hiroshima 739-8511 (JP); National University Corporation Hokkaido University, Hokkaido 060-0808 (JP); Tohoku University, Sendai-shi, Miyagi 980-8577 (JP); Rozai Kogyo Kaisha, Ltd., Osaka-shi, Osaka 550-0015 (JP)
(72) Inventor: KISHIMURA, Tsukasa, Hiroshima-shi, Hiroshima 7313169 (JP); MIYAKE, Tomohisa, Hiroshima-shi, Hiroshima 7313169 (JP); SATO, Junichi, Setagaya-ku, Tokyo 1580086 (JP); SHIMOKURI, Daisuke, Higashi-Hiroshima City, Hiroshima 7398511 (JP); HASHIMOTO, Nozomu, Kita-ku, Sapporo-shi, Hokkaido 0600808 (JP); NAKAMURA, Hisashi, Sendai-shi, Miyagi 9808577 (JP); TAKEMURA, Sinichiro, Nishi-ku, Osaka-shi, Osaka 5500015 (JP)
(74) Representative: Scholz, Volker
(86) International application number: PCT/JP2024/004340
(87) International publication number: WO 2024/181084

(57) **Abstract**

OBJECT

To provide an industrial furnace that burns ammonia efficiently while decreasing nitrogen oxides.

MEANS OF REALIZING THE OBJECT

An industrial furnace 1 burns ammonia using flame F, emitted by a burner 10. Ammonia is supplied to the burner 10 alongside of combustion air and fuel gas. Injection nozzles 21, 22, 23, 24 for ammonia each have a shape of a tube. The injection nozzles 21, 22, 23, 24 for ammonia are provided on a wall surface of a furnace body 2 and pierce the wall surface. The injection nozzles 21, 22, 23, 24 for ammonia each have a top end that protrudes toward the interior of the furnace body 2 from the wall surface. The injection nozzles 21, 22, 23, 24 for ammonia are used to inject ammonia exclusively. In addition, the injection nozzles 21, 22, 23, 24 for ammonia are entirely formed from a catalyst C that decomposes ammonia into hydrogen and nitrogen.

## Description

### TECHNICAL FIELD

The present invention generally relates to an industrial furnace that burns ammonia.

### BACKGROUND ART

The recent trend toward prevention of global warming has drawn attention to ammonia as new fuel, which emits no carbon dioxide under combustion. Ammonia, when mixed with fossil fuel or burnt alone, is known to increase emission of nitrogen oxides (NOₓ) (see, for example, Patent document 1).

A combustion device in Patent document 1 solves the problems related with increase in nitrogen oxides under the mixed combustion of coal with ammonia.

Ammonia has attracted a great deal of public attention as new fuel, but no industrial furnace has burnt ammonia efficiently, and is currently in a research and development phase.

More specifically, ammonia generally has the burning speed approximately 25% the burning speed of natural gas, and is increased in the emission of nitrogen oxides (NOx) under combustion, to exceed regulation value (180 ppm, converted to O₂ = 11%). Ammonia, therefore, is unusable as the fuel.

It is becoming clearer that the burning speed of ammonia gas that has the hydrogen content substantially by 30% becomes comparable to the burning speed of natural gas, and the hydrogen content substantially by 20% leads to the burning speed sufficient for practical use.

To burn ammonia using a burner in the industrial furnace, ammonia needs be decomposed into hydrogen and nitrogen, but currently no device dose this. The industrial furnace, therefore, is forced to rely on fossil fuel and other energy sources, leading to the inability to reduce greenhouse gas emissions (nitrogen oxides).

### RELATED ART DOCUMENTS

### PATENT DOCUMENTS

Patent document 1: Japanese Patent No. 7020759

### DISCLOSURE OF THE INVENTION

### PROBLEMS TO BE SOLVED BY THE INVENTION

To solve the above problems, it is an object of the present invention to provide an industrial furnace that burns ammonia efficiently while decreasing nitrogen oxides.

### MEANS OF SOLVING THE PROBLEMS

To achieve the above object, an aspect of the present invention provides an industrial furnace (1). The industrial furnace (1) includes a furnace body (2), a burner (10), and injection nozzles (21, 22, 23, 24) for ammonia.

The furnace body (2) has a wall surface.

The burner (10) emits flame (F). The flame (F) is used to burn ammonia. Ammonia is supplied to the burner (10) alongside of combustion air or alongside of combustion air and fuel gas.

The injection nozzles (21, 22, 23, 24) for ammonia each have a shape of a tube. The injection nozzles (21, 22, 23, 24) for ammonia are provided on the wall surface of the furnace body (2) and pierce the wall surface. The injection nozzles (21, 22, 23, 24) for ammonia each have a top end that protrudes toward the interior of the furnace body (2) from the wall surface. The injection nozzles (21, 22, 23, 24) for ammonia are used to inject ammonia exclusively.

In addition, according to an aspect of the present invention, the injection nozzles (21, 22, 23, 24) for ammonia are entirely formed from a catalyst (C) that decomposes ammonia into hydrogen and nitrogen.

In addition, according to an aspect of the present invention, the injection nozzles (21, 22, 23, 24) for ammonia each have an inner peripheral surface coated with a layer of a catalyst (C) that decomposes ammonia into hydrogen and nitrogen.

In addition, according to an aspect of the present invention, the injection nozzles (21, 22, 23, 24) for ammonia each have a catalyst (C) that decomposes ammonia into hydrogen and nitrogen applied to an inner peripheral surface.

In addition, according to an aspect of the present invention, the injection nozzles (21, 22, 23, 24) for ammonia each have a structure that supports a catalyst (C) inserted inside. The catalyst (C) decomposes ammonia into hydrogen and nitrogen.

In addition, according to an aspect of the present invention, the catalyst (C) includes alumina or ceramic.

In addition, according to an aspect of the present invention, the top ends of the injection nozzles (21, 22, 23, 24) for ammonia protrude from the wall surface by not less than 50mm.

Symbols in parentheses show constituents or items corresponding to the drawings.

### Advantageous Effects of Invention

According to the present invention, the injection nozzles for ammonia each have the shape of the tube and pierce the wall surface of the furnace body, the top ends of the injection nozzles for ammonia as protrusions protrude toward the interior of the furnace body from the wall surface, and the injection nozzles for ammonia are used to inject ammonia exclusively. The protrusions, therefore, are directly exposed to the high temperature inside the furnace body.

This heats the protrusions efficiently, and ammonia that passes the protrusions as well. This helps combustion of hydrogen contained in ammonia, and decreases generation of nitrogen oxides.

Exposing the protrusions to the interior of the furnace body leads to thermal conduction of the protrusions to heat the injection nozzles entirely. This also helps combustion of hydrogen contained in ammonia, and controls generation of nitrogen oxides.

In addition, the injection nozzles for ammonia are entirely formed from the catalyst that decomposes ammonia into hydrogen and nitrogen. That is, the injection nozzles for ammonia entirely function as the catalyst, to generate more hydrogen. This further helps combustion of hydrogen, and decreases nitrogen oxides.

In addition, the injection nozzles for ammonia each have the inner peripheral surface coated with the layer of the catalyst that decomposes ammonia into hydrogen and nitrogen, or have the catalyst that decomposes ammonia into hydrogen and nitrogen applied to the inner peripheral surface. That is, the inner peripheral surface functions as the catalyst, to generate more hydrogen. This further helps combustion of hydrogen, and controls generation of nitrogen oxides.

Alternatively, the injection nozzles for ammonia each have the structure that supports the catalyst inserted inside. The catalyst decomposes ammonia into hydrogen and nitrogen. This also generates more hydrogen, and controls generation of nitrogen oxides.

In addition, the catalyst includes alumina. This helps efficient decomposition of ammonia, to generate hydrogen simply. Also, using alumina, which is relatively inexpensive, lowers cost for manufacturing the industrial furnace.

Forming the entire injection nozzles for ammonia or the inner peripheral surface of the injection nozzles for ammonia from alumina as the catalyst prevents corrosion of the injection nozzles for alumina by ammonia or deterioration or damages due to oxidation by heat.

Alternatively, ceramic can substitute for alumina as the catalyst.

As a side note, forming the injection nozzles for ammonia using pipes of a metal other than alumina or ceramic promotes corrosion by ammonia and oxidation by heat, which leads to deterioration and damages at an earlier stage. Alumina or ceramic as the catalyst prevents these problems and physically stabilizes combustion conditions.

In addition, the top ends of the injection nozzles for ammonia (protrusions, in other words) protrude from the wall surface by not less than 50mm. This heats the protrusions efficiently, and ammonia that passes the protrusions as well. This helps combustion of hydrogen contained in ammonia, and controls generation of nitrogen oxides.

The protrusions, which are not less than 50mm long and exposed to the interior of the furnace body, absorb the heat inside the furnace body, to heat the entire injection nozzles for ammonia efficiently due to heat transfer. This helps combustion of hydrogen contained in ammonia.

### BRIEF DESCRIPTION OF THE DRAWINGS

[Fig. 1] It is a vertical cross-sectional view of the main components of an industrial furnace according to an embodiment of the present invention.
[Fig. 2] It is an enlarged vertical cross-sectional view of an injection nozzle for ammonia in the industrial furnace according to the embodiment of the present invention.
[Fig. 3] It is an enlarged vertical cross-sectional view of an injection nozzle for ammonia in the industrial furnace according to another embodiment of the present invention.

### MODE FOR CARRYING OUT THE INVENTION

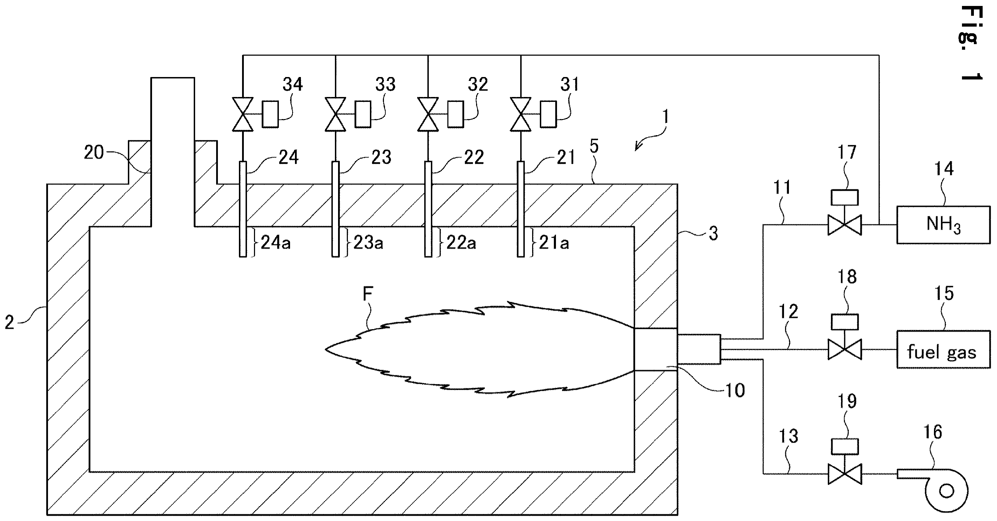

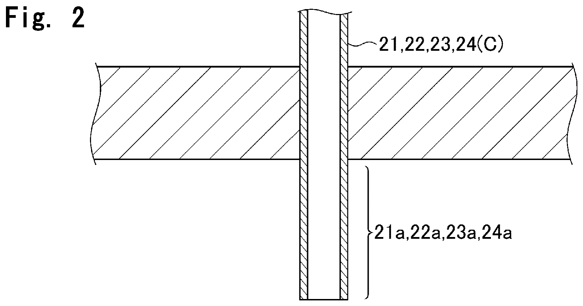

Referring to Fig. 1 and Fig. 2, an industrial furnace 1 according to an embodiment of the present invention will be described.

As illustrated in Fig. 1, the industrial furnace 1 (metal heating furnace 1 as an example) in this embodiment is a furnace 1. The furnace 1 has a substantially rectangular-shaped cross section, and is equipped with a burner 10 provided on a furnace wall 3 of a furnace body 2. Flame F is emitted by the burner 10, and is used for mixed combustion of ammonia (NH₃) with gas fuel.

Ammonia (NH₃) is supplied to the burner 10 from an ammonia feeding device 14 through a first pipe 11. The first pipe 11 has an on-off valve (solenoid valve) 17 for ammonia at the middle. Gas fuel includes conventional gas such as town gas and propane gas, and is supplied to the burner 10 from a gas feeding device 15 through a second pipe 12. The second pipe 12 has an on-off valve (solenoid valve) 18 for gas at the middle. Combustion air is open air supplied to the burner 10 from a blower 16 through a pipe 13 for air. The pipe 13 for air has an on-off valve (solenoid valve) 19 for air at the middle. The burner 10 extends in a horizontal direction, and emits the flame F in the horizontal direction (from the right to the left in Fig. 1).

The industrial furnace 1 has four injection nozzles 21, 22, 23, 24 for ammonia (first injection nozzle for ammonia, second injection nozzle for ammonia, third injection nozzle for ammonia, fourth injection nozzle for ammonia) provided on a ceiling wall 5 at intervals (regular intervals in this embodiment) in the direction in which the flame F extends, that is from the right to the left in Fig. 1.

The injection nozzles 21, 22, 23, 24 for ammonia jet ammonia, supplied by the ammonia feeding device 14, into the furnace through solenoid valves (first solenoid valve, second solenoid valve, third solenoid valve, fourth solenoid valve) 31, 32, 33, 34 in the direction orthogonal to the direction in which the flame F extends, that is from an upper side part to the lower side part.

A third pipe 41 branches off from part of the first pipe 11 between the ammonia feeding device 14 and the on-off valve 17 for ammonia. The third pipe 41 is used to supply ammonia to the injection nozzles 21, 22, 23, 24 for ammonia from the ammonia feeding device 14.

A flue 20 is provided on the ceiling wall 5 of the industrial furnace 1 to discharge exhaust gas.

The injection nozzles 21, 22, 23, 24 for ammonia are provided on a wall surface (ceiling wall 5) of the furnace body 2 of the industrial furnace 1. The injection nozzles 21, 22, 23, 24 for ammonia each have a shape of a tube and pierce the wall surface. The injection nozzles 21, 22, 23, 24 for ammonia are used to inject ammonia exclusively. The injection nozzles 21, 22, 23, 24 for ammonia each have a top end that protrudes toward the interior of the furnace body 2 from the wall surface. Height of the part that protrudes (length of protrusions) (protrusions: first protrusion 21a, second protrusion 22a, third protrusion 23a, fourth protrusion 24a) is not strictly limited. To absorb heat inside the furnace body 2 efficiently, the protrusions 21a, 22a, 23a, 24a preferably have the height of not less than 50mm. Alternatively, the height may be less than 50mm depending on conditions including diameter of the injection nozzles 21, 22, 23, 24 for ammonia.

The injection nozzles 21, 22, 23, 24 for ammonia are not necessarily provided on the ceiling wall 5. Alternatively, the injection nozzles 21, 22, 23, 24 for ammonia may be provided on a side wall 3 closer to the burner 10 or the other side wall opposite the side wall 3.

In this embodiment, the injection nozzles 21, 22, 23, 24 for ammonia are entirely formed from a catalyst C that decomposes ammonia into hydrogen and nitrogen. In this embodiment, the catalyst C is alumina, but the catalyst C is not limited to alumina. Examples of the catalyst C other than alumina include lutetium series, high entropy alloy of Co, Mo, Fe, Ni, and Cu, metal amide, and imide.

According to the industrial furnace 1 of this embodiment, the top ends of the injection nozzles 21, 22, 23, 24 for ammonia as the protrusions (first protrusion 21a, second protrusion 22a, third protrusion 23a, fourth protrusion 24a) protrude toward the interior of the furnace body 2 from the wall surface. The protrusions 21a, 22a, 23a, 24a, therefore, are brought into direct contact with a high temperature atmosphere inside the furnace body 2. This efficiently heats the protrusions 21a, 22a, 23a, 24a and ammonia that passes the protrusions 21a, 22a, 23a, 24a. This helps combustion of hydrogen contained in ammonia.

The protrusions 21a, 22a, 23a, 24a have the height (length of protrusions) of not less than 50mm, which is exposed to the interior of the furnace body 2. This efficiently heats the protrusions 21a, 22a, 23a, 24a and helps combustion of hydrogen contained in ammonia.

The high temperature heat received by the protrusions 21a, 22a, 23a, 24a is transmitted to other part of the injection nozzles 21, 22, 23, 24 for ammonia, such that the injection nozzles 21, 22, 23, 24 for ammonia are entirely heated. This further helps combustion of hydrogen contained in ammonia.

In this embodiment, the injection nozzles 21, 22, 23, 24 for ammonia are entirely formed from alumina as the catalyst C that decomposes ammonia into hydrogen and nitrogen. This efficiently generates hydrogen from ammonia.

The alumina, which is efficiently heated for the effect of the protrusions 21a, 22a, 23a, 24a, is improved in a catalytic effect. This generates hydrogen from ammonia more efficiently.

Using alumina, which is relatively inexpensive, as the catalyst C lowers cost for manufacturing the injection nozzles 21, 22, 23, 24 for ammonia and the industrial furnace 1 as the whole, as compared with metal of lutetium series.

According to the industrial furnace 1 of this embodiment, the injection nozzles 21, 22, 23, 24 for ammonia, which include the protrusions 21a, 22a, 23a, 24a, are entirely formed from alumina as the catalyst C. This generates hydrogen usable as the fuel from ammonia efficiently. This allows for efficient use of ammonia as fuel, and controls generation of nitrogen oxides as a toxic substance.

In this embodiment, the injection nozzles 21, 22, 23, 24 for ammonia are entirely formed from alumina. Alternatively, part of the injection nozzles 21, 22, 23, 24 for ammonia (upper half, lower half, or only protrusions 21a, 22a, 23a, 24a, for example) may be formed from alumina. This modification decreases alumina usage, and lowers manufacturing process and manufacturing cost of the injection nozzles 21, 22, 23, 24 for ammonia and the industrial furnace 1.

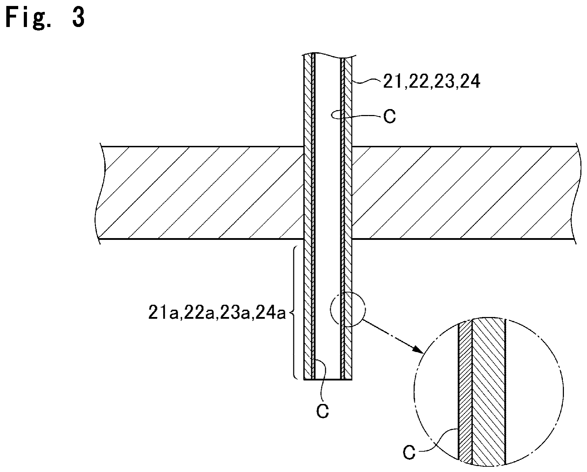

Referring to Fig. 1 and Fig. 3, the industrial furnace 1 according to another embodiment of the present invention will be described.

The injection nozzles 21, 22, 23, 24 for ammonia of this embodiment, which include the protrusions (first protrusion 21a, second protrusion 22a, third protrusion 23a, fourth protrusion 24a), each have an entire inner peripheral surface coated with a layer of the catalyst C. Except for this, the industrial furnace 1 of this embodiment has the same configuration as the prior embodiment.

In this embodiment also, the catalyst C is alumina, but the catalyst C is not limited to alumina. More specifically, coating the inner peripheral surface of the tube, which is formed from a substance other than alumina, with alumina as the catalyst C forms the injection nozzles 21, 22, 23, 24 for ammonia.

In this embodiment, the injection nozzles 21, 22, 23, 24 for ammonia, which include the protrusions 21a, 22a, 23a, 24a, have the inner peripheral surface coated with the layer of the catalyst C, which is alumina. Heat and catalytic function of alumina generates a large amount of hydrogen from ammonia. This further helps combustion of hydrogen and controls generation of nitrogen oxides.

Alternatively, the injection nozzles 21, 22, 23, 24 for ammonia may have part of, not the entire, the inner peripheral surface coated. This also lowers manufacturing process and manufacturing cost of the injection nozzles 21, 22, 23, 24 for ammonia and the industrial furnace 1.

Alternatively, the injection nozzles 21, 22, 23, 24 for ammonia each may have the catalyst C that decomposes ammonia into hydrogen and nitrogen applied to the inner peripheral surface. Alternatively, the injection nozzles 21, 22, 23, 24 for ammonia each may have a structure that supports the catalyst C, honeycomb structure for example, inserted inside. The catalyst C decomposes ammonia into hydrogen and nitrogen. These modifications generate a larger amount of hydrogen and control generation of nitrogen oxides.

In this embodiment, the catalyst C is alumina. Alternatively, a heat-resistant glass as well as a ceramic, silicon nitride for example, can substitute for alumina.

In this embodiment, the furnace 1 as the industrial furnace 1 uses the flame F, emitted by the burner 10, for mixed combustion of ammonia (NH₃) with gas fuel alongside of combustion air. The invention is applicable to an ammonia-fueled furnace, which burns ammonia (NH₃) alongside of combustion air without the need for gas fuel.

The above-mentioned patent document does not disclose the industrial furnace 1, in which the injection nozzles 21, 22, 23, 24 for ammonia include the protrusions 21a, 22a, 23a, 24a or the injection nozzles 21, 22, 23, 24 for ammonia are entirely formed from the catalyst (alumina) C.

The industrial furnace 1 discussed in this embodiment is applicable to various fields that burn ammonia (thermal power generation, for example).

### DESCRIPTION OF NUMERALS

- 1: industrial furnace
- 2: furnace body
- 3: side wall
- 5: ceiling wall
- 10: burner
- 11: first pipe
- 12: second pipe
- 13: pipe for air
- 14: ammonia feeding device
- 15: gas feeding device
- 16: blower
- 17: on-off valve for ammonia
- 18: on-off valve for gas
- 19: on-off valve for air
- 20: flue
- 21: first injection nozzle for ammonia
- 21a: first protrusion
- 22: second injection nozzle for ammonia
- 22a: second protrusion
- 23: third injection nozzle for ammonia
- 23a: third protrusion
- 24: fourth injection nozzle for ammonia
- 24a: fourth protrusion
- 31: first solenoid valve
- 32: second solenoid valve
- 33: third solenoid valve
- 34: fourth solenoid valve
- 41: third pipe
- C: catalyst
- F: flame

## Claims

1. An industrial furnace comprising:
a furnace body having a wall surface;
a burner which emits flame, the flame being used to burn ammonia, the ammonia being supplied to the burner alongside of combustion air or alongside of combustion air and fuel gas; and
injection nozzles for ammonia, the injection nozzles for ammonia having a shape of a tube, the injection nozzles for ammonia being provided on the wall surface of the furnace body of the industrial furnace and piercing the wall surface, the injection nozzles for ammonia each having a top end that protrudes toward an interior of the furnace body from the wall surface, and the injection nozzles for ammonia being configured to inject ammonia exclusively.

2. The industrial furnace as claimed in Claim 1, wherein
the injection nozzles for ammonia are entirely formed from a catalyst that decomposes ammonia into hydrogen and nitrogen.

3. The industrial furnace as claimed in Claim 1, wherein
the injection nozzles for ammonia each have an inner peripheral surface coated with a layer of a catalyst that decomposes ammonia into hydrogen and nitrogen.

4. The industrial furnace as claimed in Claim1, wherein
the injection nozzles for ammonia each have a catalyst that decomposes ammonia into hydrogen and nitrogen applied to an inner peripheral surface.

5. The industrial furnace as claimed in Claim1, wherein
the injection nozzles for ammonia each have a structure that supports a catalyst inserted inside, the catalyst being used to decompose ammonia into hydrogen and nitrogen.

6. The industrial furnace as claimed in any one of Claim 2 to Claim5, wherein
the catalyst includes alumina or ceramic.

7. The industrial furnace as claimed in Claim1, wherein
the top ends of the injection nozzles for ammonia protrude from the wall surface by not less than 50mm.
